(19) Europäisches Patentamt
European Patent Office
Office européen des brevets

(11) **EP 2 747 929 B1**

(12) **EUROPÄISCHE PATENTSCHRIFT**

(45) Veröffentlichungstag und Bekanntmachung des Hinweises auf die Patenterteilung:
**04.11.2015 Patentblatt 2015/45**

(51) Int Cl.:
**B23G 5/10** (2006.01) **B23B 29/034** (2006.01)
**B23Q 11/00** (2006.01)

(21) Anmeldenummer: **12758760.8**

(22) Anmeldetag: **22.08.2012**

(86) Internationale Anmeldenummer:
**PCT/EP2012/003553**

(87) Internationale Veröffentlichungsnummer:
**WO 2013/026569 (28.02.2013 Gazette 2013/09)**

(54) **WERKZEUG ZUM BEARBEITEN VON WERKSTÜCKEN**

TOOL FOR PROCESSING WORK PIECES

OUTIL POUR USINER DES PIÈCES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.08.2011 DE 102011111549**

(43) Veröffentlichungstag der Anmeldung:
**02.07.2014 Patentblatt 2014/27**

(73) Patentinhaber: **MAPAL Fabrik für Präzisionswerkzeuge
Dr. Kress KG
73431 Aalen (DE)**

(72) Erfinder: **FÜHRER, Matthias
04720 Döbeln (DE)**

(74) Vertreter: **Gleiss, Alf-Olav et al
Gleiss Große Schrell und Partner mbB
Patentanwälte Rechtsanwälte
Leitzstraße 45
70469 Stuttgart (DE)**

(56) Entgegenhaltungen:
**EP-A1- 1 789 222     DE-A1- 4 428 049
DE-A1-102007 042 248**

EP 2 747 929 B1

## Beschreibung

Die Erfindung betrifft ein Werkzeug zum Bearbeiten von Werkstücken gemäß Oberbegriff des Anspruchs 1.

Werkzeuge der hier angesprochenen Art werden insbesondere zur spanenden Konturbearbeitung von Werkstücken herangezogen, wobei beispielsweise mittels eines an einem Arbeitsschieber befestigten Bearbeitungselements, insbesondere einer Messerplatte, Späne von dem Werkstück abgetragen werden, wobei das Werkzeug um eine Drehachse mit vorzugsweise hoher Drehzahl rotiert. Der das Bearbeitungselement tragende Arbeitsschieber wird innerhalb des Grundkörpers des Werkzeugs gegenüber der Drehachse in radialer Richtung verlagert, um eine Kontur an dem Werkstück zu realisieren, gegebenenfalls aber auch, um einen Verschleiß des Bearbeitungselements auszugleichen. Bei der Verschiebung des Arbeitsschiebers innerhalb des Grundkörpers des Werkzeugs ergibt sich eine Unwucht. Diese wird durch einen weiteren Schieber, der relativ zu dem Grundkörper des Werkzeugs verschieblich ist, und durch ein Ausgleichspendel, welches gegenüber dem Grundkörper des Werkzeugs verschwenkbar ist, ausgeglichen. Um diesen Ausgleich zu bewirken, sind der Arbeitsschieber sowie der weitere Schieber über eine erste Kopplungseinrichtung miteinander verbunden, die ihrerseits mit dem Ausgleichspendel über eine zweite Kopplungseinrichtung gekoppelt ist. Werkzeuge der hier angesprochenen Art sind bekannt (DE 10 2007 042 248 A1). Sie zeichnen sich dadurch aus, dass relativ viele Bauteile nötig sind, um insbesondere die Kopplungseinrichtungen zu realisieren und eine bei Verstellung des Arbeitsschiebers auftretende Unwucht auszugleichen.

Aufgabe der Erfindung ist es daher, ein Werkzeug zu schaffen, welches diesen Nachteil vermeidet.

Zur Lösung dieser Aufgabe wird ein Werkzeug der oben genannten Art vorgeschlagen, welches die Merkmale des Anspruchs 1 aufweisen. Ein derartiges Werkzeug zeichnet sich dadurch aus, dass der weitere Schieber als Hilfsschieber ausgebildet ist, dass die zweite Kopplungseinrichtung, welche mit dem Ausgleichspendel verbunden ist, an der ersten Kopplungseinrichtung in einem Anlenkpunkt schwenkbeweglich angelenkt ist, und dass die zweite Kopplungseinrichtung darüber hinaus schwenkbar um die Drehachse des Werkzeugs gelagert ist. Bei einer Drehung der zweiten Kopplungseinrichtung um die Drehachse des Werkzeugs wird die erste Kopplungseinrichtung so verlagert, dass der Arbeitsschieber und der Hilfsschieber bezüglich der Drehachse des Werkzeugs in entgegengesetzten Richtungen verlagert werden.

Durch diese Ausgestaltung ergibt sich ein einfacher Aufbau des Werkzeugs, der nicht nur eine Unwucht bei einer Verlagerung des Arbeitsschiebers vermeidet, es wird auch ein Ausgleich der Fliehkraft gewährleistet.

Bei einem bevorzugten Ausführungsbeispiel ist die erste Kopplungseinrichtung durch eine erste Kopplungsstange realisiert, was einen besonders einfachen Aufbau des Werkzeugs ermöglicht.

Bei einem weiteren bevorzugten Ausführungsbeispiel vereinfacht sich der Aufbau dadurch, dass auch die zweite Kopplungseinrichtung ebenfalls als zweite Kopplungsstange ausgebildet ist.

Besonders bevorzugt wird außerdem ein Ausführungsbeispiel, bei dem die Massen des Arbeitsschiebers und des Hilfsschiebers gleich sind, sodass ein Ausgleich der Unwucht und der Fliehkraft bei einer Verlagerung des Arbeitsschiebers besonders einfach möglich ist. Der Arbeitsschieber trägt, wie oben bereits angesprochen, mindestens ein Bearbeitungselement. Dieses kann unmittelbar am Arbeitsschieber angebracht werden. Möglich ist es aber auch, worauf unten näher eingegangen wird, an dem Arbeitsschieber ein Halteelement anzubringen, an der dann ein Bearbeitungselement befestigt wird. Wenn hier und im Folgenden die Masse des Arbeitsschiebers angesprochen wird, so ist stets gemeint, dass dessen Gesamtmasse gemeint ist, die sich aus der Masse des Arbeitsschiebers selbst und der Masse des mindestens einen daran angebrachten Bearbeitungselements zusammensetzt. Gegebenenfalls ist noch die Masse eines Halteelements hinzuzurechnen. Bei dem hier angesprochenen Ausführungsbeispiel ist also die Masse des Arbeitsschiebers einschließlich der Masse mindestens eines Bearbeitungselements und gegebenenfalls eines Halteelements gleich der Masse des Hilfsschiebers, um einen Ausgleich der Unwucht und der Fliehkraft bei einer Verlagerung des Arbeitsschiebers einschließlich des Bearbeitungselements und gegebenenfalls der Halteplatte zu realisieren.

Besonders bevorzugt wird außerdem ein Ausführungsbeispiel, bei dem das Ausgleichspendel gegenüber dem Arbeitsschieber und dem Hilfsschieber anordenbar ist. Dieser Aufbau führt dazu, dass die Fliehkräfte und Unwuchten besonders gut ausgeglichen werden.

Bei einem weiteren besonders bevorzugten Ausführungsbeispiel wird der Abstand zwischen der Drehachse des Werkzeugs und dem Anlenkpunkt der zweiten Kopplungseinrichtung an der ersten Kopplungseinrichtung als $r_1$ bezeichnet und der Abstand zwischen der Drehachse des Werkzeugs und dem Ausgleichspendel als $r_2$. Dabei ist vorgesehen, dass das Produkt von $r_1$ und Gesamtmasse von Arbeitsschieber und Hilfsschieber dem Produkt von $r_2$ und Masse des Ausgleichspendels entspricht.

Weitere Ausgestaltungen ergeben sich aus den übrigen Unteransprüchen.

Die Erfindung wird im Folgenden anhand der Zeichnungen näher erläutert. Es zeigen:

Figur 1        eine Prinzipskizze eines Werkzeugs im Querschnitt;

Figur 2        eine Detailvergrößerung aus Figur 1;

| Figur 3 | die für einen Fliehkraft- und Unwuchtausgleich wesentlichen Elemente eines Werkzeugs; |
| Figuren 4 bis 8 | verschiedene Arbeitspositionen der in Figur 3 dargestellten Elemente; |
| Figur 9 | eine perspektivische Ansicht der in den Figuren 4 bis 8 dargestellten Elemente und |
| Figur 10 | eine perspektivische Frontansicht eines Werkzeugs. |

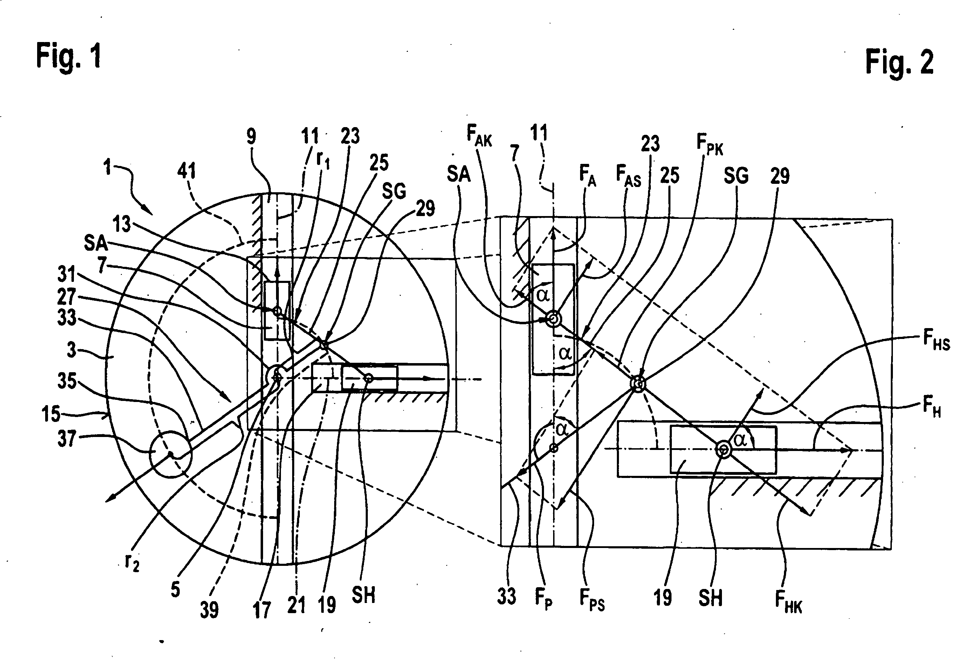

Die Prinzipskizze gemäß Figur 1 zeigt ein Werkzeug 1 im Querschnitt, welches einen Grundkörper 3 aufweist, der bei Bearbeitung eines hier nicht dargestellten Werkstücks um eine Drehachse 5 rotiert.

Das Werkzeug 1 weist mindestens einen Arbeitsschieber 7 auf, welcher entlang einer im Grundkörper 3 vorhandenen Führung verschiebbar ist, hier vorzugsweise entlang einer punktiert angedeuteten senkrecht durch die Drehachse 5 verlaufenden Durchmesserlinie 11. An dem Arbeitsschieber 7 ist mindestens ein hier nicht dargestelltes Bearbeitungselement, beispielsweise eine Messerplatte, befestigt. In der Regel trägt der Arbeitsschieber 7 ein Halteelement, auf das unten näher eingegangen wird. An diesem kann dann mindestens ein Bearbeitungselement angebracht werden, um eine Konturbearbeitung eines Werkstücks durchzuführen. Üblicherweise ragt das Bearbeitungselement über die Stirnfläche des Werkzeugs 1 hinaus, um die Konturbearbeitung durchzuführen.

Figur 1 ist zu entnehmen, dass eine Führung 9 vorgesehen ist, entlang derer der Arbeitsschieber 7 verlagert wird. Es zeigt sich hier, dass die Führung 9 sich entlang einer gedachten, hier senkrecht verlaufenden Durchmesserlinie 11 erstreckt. Der Arbeitsschieber 7 kann also aus der in Figur 1 dargestellten Position weiter nach oben verlagert werden, aber auch in entgegengesetzter Richtung nach unten über den Bereich der Drehachse 7 hinweg. Vorzugsweise ist vorgesehen, dass der Arbeitsschieber 7 über den ganzen Durchmesser des Grundkörpers 3 des Werkzeugs 1 verlagerbar ist. Grundsätzlich ist es möglich, dass ein Bearbeitungselement an dem Arbeitsschieber so angebracht ist, dass es über dessen oberes Ende 13 hinausragt und bei einer Verlagerung des Arbeitsschiebers 7 nach oben auch über die Umfangsfläche 15 des Grundkörpers 3 vorspringt.

Das Werkzeug 1 weist einen weiteren Schieber auf, der hier als Hilfsschieber 19 ausgebildet ist. Er ist also vorzugsweise nicht mit einem Bearbeitungselement, beispielsweise einer Messerplatte oder dergleichen, versehen.

Der Hilfsschieber 19 ist entlang einer Führung 17 im Grundkörper 3 verlagerbaren, vorzugsweise entlang einer gedachten Durchmesserlinie, welche senkrecht auf der Durchmesserlinie 11 steht.

Der Arbeitsschieber 7 und der Hilfsschieber 19 sind über eine erste Kopplungseinrichtung 23 verbunden, die vorzugsweise als Koppelstange 25 ausgebildet und damit sehr einfach realisiert ist. Die Koppelstange 25 greift einerseits am Arbeitsschieber 7 und andererseits am Hilfsschieber 19 schwenkbeweglich an. Vorzugsweise greift sie am Schwerpunkt SA des Arbeitsschiebers 7 und am Schwerpunkt SH des Hilfsschiebers 19 an.

Vorzugsweise weisen die beiden Schieber 7 und 19 die gleiche Masse auf, sodass der gemeinsame Schwerpunkt SG der beiden Schieber 7 und 19 in der Mitte der Koppelstange 25 liegt.

Das Werkzeug 1 weist eine zweite Kopplungseinrichtung 27 auf, die an einem Anlenkpunkt 29 an der ersten Kopplungseinrichtung 23, hier also an der Koppelstange 25, schwenkbeweglich angelenkt ist. Vorzugsweise fällt der Anlenkpunkt 29 mit dem gemeinsamen Schwerpunkt SG von Arbeitsschieber 7 und Hilfsschieber 19 zusammen.

Vorzugsweise ist vorgesehen, dass die zweite Kopplungseinrichtung 27 im Bereich 31 schwenkbeweglich um die Drehachse 5 im Grundkörper 3 in einem Lager gelagert ist. Um einen einfachen Aufbau der zweiten Kopplungseinrichtung 27 zu realisieren, ist diese vorzugsweise ebenfalls als Koppelstange 33 ausgelegt. An deren dem Anlenkpunkt 29 gegenüberliegenden Ende 35 ist ein Ausgleichspendel 37 angebracht, welches gegenüber dem Arbeitsschieber 7 und dem Hilfsschieber 19 angeordnet ist, das heißt, die beiden Schieber 7 und 19 sind in einer gedachten Hälfte des Grundkörpers 3 des Werkzeugs 1 angeordnet und das Ausgleichspendel 37 in der gegenüberliegenden zweiten Hälfte.

Um einen besonders kompakten Aufbau des Werkzeugs 1 zu ermöglichen, sind die Koppelstangen 25 und 33 vorzugsweise plattenförmig ausgebildet.

Die Masse des Ausgleichspendels 37 ist so gewählt, dass der Gesamtschwerpunkt der sich bewegenden Massen, also der Schieber und des Ausgleichspendels, auf der Drehachse 5 des Werkzeugs 1 liegt. Hierbei sei noch einmal darauf hingewiesen, dass in diesem Zusammenhang die Masse des Arbeitsschiebers sich zusammensetzt aus der Masse des Arbeitsschiebers selbst und der eines Bearbeitungselements sowie gegebenenfalls der Masse eines am Arbeitsschieber angebrachten Halteelements.

Dieser Aufbau gewährleistet, dass die im Betrieb des Werkzeugs 1 auftretenden Fliehkräfte die durch an dem Arbeitsschieber 7, dem Hilfsschieber 19 und dem Ausgleichspendel 37 angreifende Pfeile angedeutet sind, sich die Waage halten und in der Drehachse 5 des Werkzeugs 1 im Gleichgewicht sind. Dadurch wird auch bei einer Verlagerung des Arbeitsschiebers 7, gemeinsam mit einem Bearbeitungselement und gegebenenfalls einer Halteplatte, sichergestellt, dass Hilfsschieber 19 und Ausgleichspendel 37 so verlagert werden, dass der Gesamtschwerpunkt der sich bewegenden Massen auf der Drehachse 5 des Werkzeugs 1 liegt und sich die Fliehkräfte hier die Waage halten. Dadurch wird eine Unwucht sicher vermieden.

Dadurch, dass die Kopplungseinrichtung 27 vorzugsweise als Koppelstange 33 ausgelegt ist, die im Bereich 31 um die Drehachse 5 schwenkbar ist, bewegt sich bei einer Verlagerung des Arbeitsschiebers 7 der Anlenkpunkt 29 auf der ersten Koppelstange 25 auf einer gestrichelt angedeuteten Kreisbahn 39. Dabei wird das Ausgleichspendel 37 auf einer ebenfalls gestrichelten Kreisbahn 41 bewegt.

Auch wenn der Anlenkpunkt 29 der ersten Koppelstange 25 auf einer Kreisbahn 39 geführt wird, bewegen sich der Arbeitsschieber 7 und der Hilfsschieber 19 entlang der geradlinigen Führung 9 beziehungsweise 17. Die Führungen 9 und 17 verlaufen vorzugsweise in einem rechten Winkel zueinander. Dabei ist zum Grundprinzip der Kopplung festzuhalten, dass bei einer Auswärtsbewegung des Arbeitsschiebers 7 in Richtung auf die Umfangsfläche 15 des Werkzeugs 1 der Hilfsschieber 19 eine nach innen in Richtung der Drehachse 5 gerichtete geradlinige Bewegung ausführt.

Bei einem bevorzugten Ausführungsbeispiel des Werkzeugs 1 liegen die Schwerpunkte der Arbeitsschieber 7 und der Hilfsschieber 19 in einer gemeinsamen gedachten Ebene, auf welcher die Drehachse 5 des Werkzeugs 1 vorzugsweise senkrecht steht. Dadurch ergibt sich auf einfache Weise nicht nur eine stationäre sondern auch eine dynamische Unwuchtkompensation.

Besonders bevorzugt ist vorgesehen, dass auch der Schwerpunkt des Ausgleichspendels 37 in derselben Ebene wie die Schieber 7 und 19 angeordnet ist.

Um die Restkräfte und die Unwucht der Massen der beiden Schieber 7 und 19 auszugleichen, werden die Masse des Ausgleichspendels 37 und dessen Abstand zur Drehachse 5 auf die Masse des Arbeitsschiebers 7 (einschließlich der Masse eines Bearbeitungselements und gegebenenfalls eines Halteelements) und der Masse des Hilfsschiebers 19 sowie der Abstand des gemeinsamen Schwerpunkts SG der Massen der Schieber 7 und 19 zur Drehachse 5 aufeinander abgestimmt. Dabei werden der Abstand des gemeinsamen Schwerpunkts SG zur Drehachse 5 als r1 und der Abstand des Schwerpunkts SP des Ausgleichspendels 37 zur Drehachse 5 als $r_2$ bezeichnet. Es ergibt sich damit die folgende Gleichung:

$$r_1 \cdot (m_A + m_H) = r_2 \cdot m_P.$$

Dabei wird die Masse des Arbeitsschiebers 7 inklusive der Masse eines Bearbeitungselements und gegebenenfalls der Masse eines Halteelements als $m_A$, die Masse des Hilfsschiebers 19 als $m_H$ und die Masse des Ausgleichspendels 37 als $m_P$ bezeichnet.

Die am Arbeitsschieber 7, am Hilfsschieber 19 und am Ausgleichspendel 37 angreifenden Fliehkräfte, die in Figur 1 durch Pfeile dargestellt sind, sind noch einmal aus der in Figur 2 wiedergegebenen Detailvergrößerung aus Figur 1 erkennbar.

Am Schwerpunkt SA des Arbeitsschiebers 7 (mit Bearbeitungselement und gegebenenfalls Halteplatte) greift die Fliehkraft $F_A$ an, die ausgehend von der Drehachse 5 radial nach außen wirkt, also entlang der gedachten Durchmesserlinie 11. Diese Fliehkraft setzt sich zusammen aus einem in Richtung der Koppelstange 25 der ersten Kopplungseinrichtung 27 wirkenden Kraft $F_{AK}$ und einer Kraft $F_{AS}$, die senkrecht zur Koppelstange 25 verläuft.

Entsprechend setzt sich die am Schwerpunkt SH des Hilfsschiebers 19 angreifende Fliehkraft $F_H$ aus einer in Richtung der Koppelstange 25 verlaufenden Teilkraft $F_{HK}$ und aus einer Teilkraft $F_{HS}$, die senkrecht zur Koppelstange 25 verläuft.

Die am Ausgleichspendel 37 angreifende Fliehkraft $F_P$ überträgt sich über die Koppelstange 33 auf den gemeinsamen Schwerpunkt SG der beiden Schieber 7 und 19 beziehungsweise auf den Anlenkpunkt 29 der zweiten Koppelstange 33 an der ersten Koppelstange 25. Die auf das Ausgleichspendel 37 wirkende Fliehkraft $F_P$ setzt sich zusammen aus einer in Richtung der Koppelstange 25 wirkenden Teilkraft $F_{PK}$ und einer senkrecht dazu verlaufenden Teilkraft $F_{PS}$.

Figur 2 soll deutlich machen, dass die an den Schiebern 7 und 19 sowie dem Ausgleichspendel 37 wirkenden Fliehkräfte $F_A$, $F_H$ und $F_P$ durch den hier dargestellten Aufbau des Werkzeugs 1 kompensiert werden, also ein Kräfteausgleich stattfindet, insbesondere wenn die oben angegebene Gleichung eingehalten wird. Dadurch ist das im Bereich 31 vorgesehene Lager für das zweite Kopplungselement 33 kräftefrei.

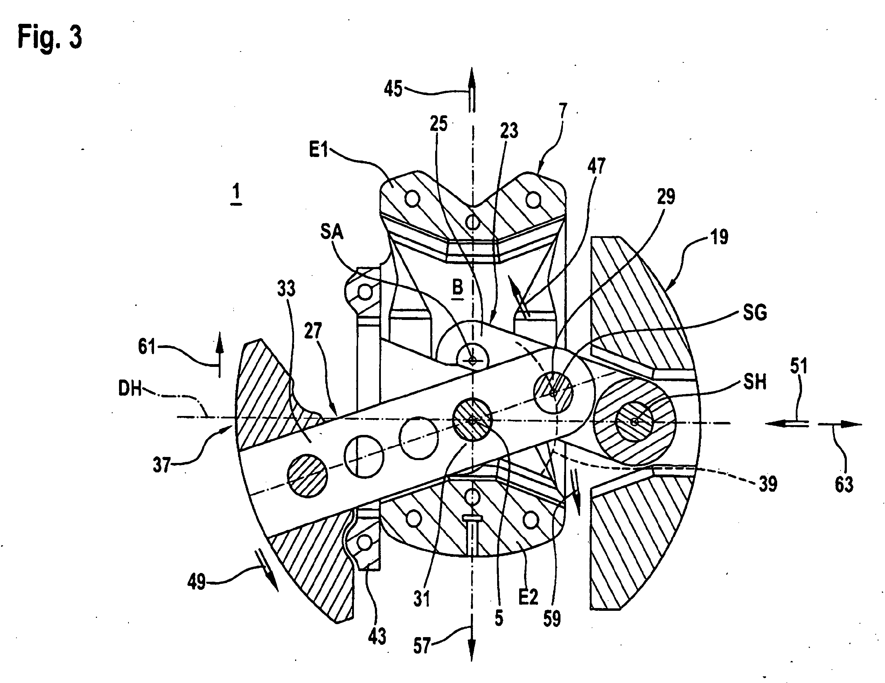

Figur 3 zeigt die anhand der Figuren 1 und 2 erläuterten, für einen Fliehkraft- und Unwuchtausgleich wesentlichen Elemente eines Werkzeugs 1, nämlich den Arbeitsschieber 7, den Hilfsschieber 19 und das Ausgleichspendel 37. Anhand der Figuren 1 und 2 erläuterte Teile werden mit den identischen Bezugsziffern versehen, sodass auf die Beschreibung zu den vorangegangenen Figuren verwiesen wird.

Der Arbeitsschieber 7 und der Hilfsschieber 19 sind über die erste Kopplungseinrichtung 23 miteinander verbunden, die, wie erläutert, vorzugsweise als - hier plattenförmige - Koppelstange 25 ausgebildet ist. Diese ist mit ihrem einen Ende schwenkbeweglich mit dem ersten Arbeitsschieber 7 verbunden, vorzugsweise in dessen Massenschwerpunkt SA. Das andere gegenüberliegende Ende der Koppelstange 25 ist schwenkbeweglich am Hilfsschieber 19 angelenkt, vorzugsweise in dessen Massenschwerpunkt SH. Die Massen des Arbeitsschiebers 7 und des Hilfsschiebers 19 sind vorzugsweise gleich groß, sodass der gemeinsame Massenschwerpunkt SG in der Mitte der Koppelstange 25 liegt, wo auch der Anlenkpunkt 29 der zweiten Kopplungseinrichtung 27 liegt, die auch hier als - hier plattenförmige - Koppelstange 33 ausgebildet ist. Die Koppelstange 33 ist im Bereich 31 schwenkbeweglich um die Drehachse 5 des Werkzeugs 1 gelagert. Durch eine etwas dickere Linie soll angedeutet werden, dass hier zum Toleranzausgleich in der Koppelstange 33 ein Langloch vorgesehen sein kann, durch die ein an einem Halter 43 angebrachter Drehzapfen greift. Der Halter 43 ist fest am Grundkörper des Werkzeugs 1 angebracht. Der Halter 43 kann auch Teil des Grundkörpers oder Teil eines Gehäuses des Werkzeugs 1 sein.

An dem dem Anlenkpunkt 29 gegenüberliegenden Ende der Koppelstange 33 ist das Ausgleichspendel 37 angebracht.

Zur Funktionsweise der Kopplung der Schieber 7 und 19 mit dem Ausgleichspendel 37 ist Folgendes festzuhalten:

Würde der Arbeitsschieber 7, wie durch einen Doppelpfeil 45 angedeutet - gemeinsam mit einem hier nicht dargestellten, am Arbeitsschieber 7 befestigten Bearbeitungselement und mit einer gegebenenfalls vorgesehenen Halteplatte -, nach oben verlagert, so würde die erste Koppelstange 25 so mitgenommen, dass sich der Anlenkpunkt 29 auf der in Figur 1 angedeuteten Kreisbahn 39 bewegt. Nämlich entsprechend dem Doppelpfeil 47 nach oben. Entsprechend würde das Ausgleichspendel 37 um die Drehachse 35, wie durch einen Doppelpfeil 49 angedeutet, nach unten schwenken.

Wie Figur 1 zu entnehmen ist, würde sich dadurch der Hilfsschieber 19 in Richtung der hier angedeuteten horizontalen Durchmesserlinie DH, wie durch einen Doppelpfeil 51 angedeutet, nach innen in Richtung auf die Drehachse 5 des Werkzeugs 1, bewegen.

Hier in Figur 3 befindet sich das Ausgleichspendel 37 in seiner untersten Position, sodass eine weitere Schwenkbewegung nicht möglich ist. Die Doppelpfeile 47 und 49 erläutern jedoch - wie gesagt - das Grundprinzip der Kopplung.

Bei einer entgegengesetzten Bewegung des Arbeitsschiebers 7 in Richtung des Einfachpfeils 57 nach oben bewegt sich der Anlenkpunkt 29 auf der ersten Koppelstange 25 entsprechend dem Einfachpfeil 59 nach unten. Dies führt zu einer Schwenkbewegung des Ausgleichpendels 37 nach oben, was durch einen Einfachpfeil 61 in Figur 3 angedeutet ist.

Die Abwärtsbewegung des Arbeitsschiebers 7 bewirkt eine durch einen Einfachpfeil 63 angedeutete Auswärtsbewegung des Hilfsschiebers 19 in Richtung der horizontalen Durchmesserlinie DH.

Nach allem ist erkennbar, dass die aus den Figuren 1 und 2 ersichtliche Funktionsweise der wesentlichen Elemente des Werkzeugs 1 bei der Ausgestaltung gemäß Figur 3 gegeben ist.

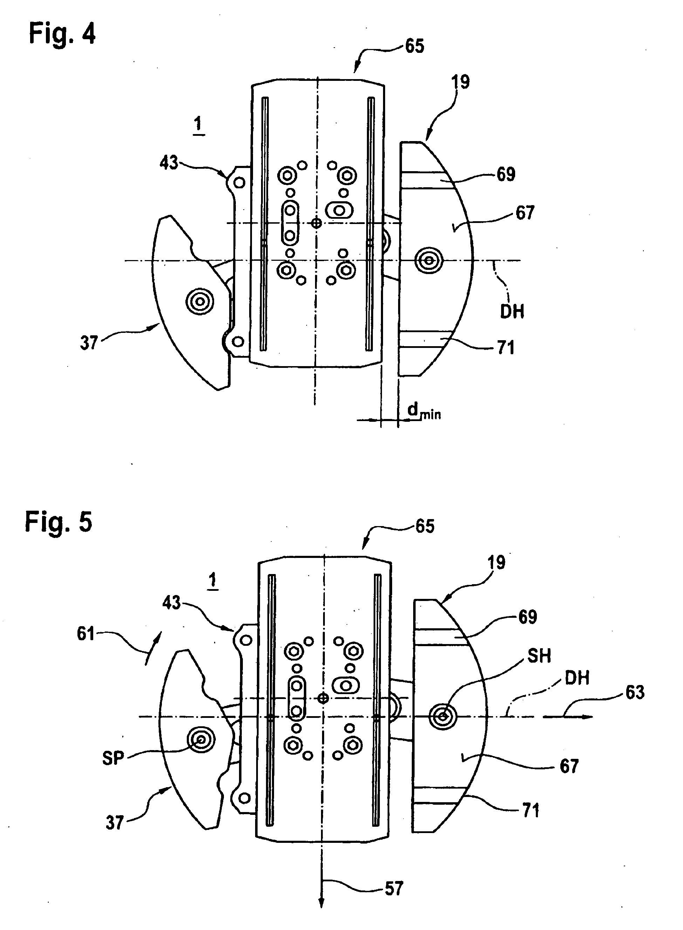

Der Arbeitsschieber 7 ist im Wesentlichen U-förmig ausgebildet. Von einer Basis B, die in Figur 3 in Draufsicht dargestellt ist, gehen an dem oberen und unteren Ende des Arbeitsschiebers 7 von der Basis B in Richtung auf den Betrachter von Figur 3 vorspringende Erhebungen E1 und E2, die gestrichelt dargestellt sind, weil sie in Schnittdarstellung wiedergegeben sind. In diesen Erhebungen E1 und E2 sind durch schwarze Punkte gekennzeichnete Bohrungen vorgesehen, in die Schrauben eingreifen können, um ein hier nicht ersichtliches Halteelement, das vorzugsweise als Halteplatte (siehe Figuren 4ff.) ausgebildet ist, am Arbeitsschieber 7 zu befestigen, die mindestens ein Bearbeitungselement, beispielsweise mindestens eine Messerplatte oder dergleichen, tragen kann. Denkbar ist es auch, mindestens ein Bearbeitungselement unmittelbar am Arbeitsschieber anzubringen.

Der Hilfsschieber 19 ist im Schnitt dargestellt. Die Koppelstange 25 greift in das Innere des Hilfsschiebers 19, sodass die beiden Schieber 7 und 19 in einer gemeinsamen gedachten Ebene angeordnet sein können, auf welcher die Drehachse 5 des Werkzeugs 1 senkrecht steht. Vorzugsweise greift die erste Kopplungseinrichtung 23 beziehungsweise deren - vorzugsweise plattenförmige - Koppelstange 25 in einer gedachten Mittelebene des Arbeitsschiebers 7 an und entsprechend in einer gedachten Mittelebene des Hilfsschiebers 19.

Vorzugsweise ist das Ausgleichspendel 37 möglichst in der gemeinsamen Ebene der Schieber 7 und 19 angeordnet, sodass die Schwerpunkte der beiden Schieber 7 und 19 und des Ausgleichspendels 37 in einer gemeinsamen Ebene liegen.

In den im Folgenden wiedergegebenen und abgehandelten Figuren 4 bis 8 sind die in Figur 3 dargestellten wesentlichen Elemente eines Werkzeugs in verschiedenen Arbeitspositionen dargestellt. Gleiche Teile sind mit gleichen Bezugsziffern versehen, sodass insofern auf die vorangegangene Beschreibung verwiesen wird. In den Figuren 4 bis 8 sind die in Figur 3 zum Teil geschnittenen Elemente des Werkzeugs 1 in Draufsicht dargestellt. Zusätzlich ist hier eine mit dem Arbeitsschieber 7 verbundene Halteplatte 65 wiedergegeben.

Figur 4 zeigt die in Figur 3 dargestellten Elemente in der in Figur 3 wiedergegebenen Position. Der Arbeitsschieber 7 des Werkzeugs 1 ist allerdings nicht erkennbar, weil er durch eine Halteplatte 65 verdeckt ist, die mit Schrauben am Arbeitsschieber 7 befestigt ist. Sie weist verschiedene Löcher auf, an denen Bearbeitungselemente, beispielsweise Messerplatten und/oder deren Halterungen, befestigt werden können.

In Figur 4 befindet sich das Ausgleichspendel 37 in seiner untersten Position, wie sie auch in Figur 3 erkennbar ist. Entsprechend ist der Arbeitsschieber 7 in seiner obersten Position angelangt, damit auch die an diesem befestigte Halteplatte 65. Der Hilfsschieber 19 ist in seiner maximal nach links ausgelenkten Position angelangt, wie sie auch in Figur 3 wiedergegeben ist, nämlich in einem minimalen Abstand $d_{min}$ zur Halteplatte 65.

Anhand von Figur 3 wurde ausgeführt, dass der Hilfsschieber 19 sich entlang beziehungsweise parallel zur horizontalen Durchmesserlinie DH bewegt. An der dem Betrachter zugewandten Oberseite 67 des Hilfsschiebers 19 sind Führungseinrichtungen vorgesehen, hier zwei parallel zueinander und zur horizontalen Durchmesserlinie DH ausgerichtete Führungsnuten 69 und 71, in welche feststehende Führungselemente eingreifen, um die - gemäß der Darstellung in Figur 4 - Horizontalbewegung des Hilfsschiebers 19 zu gewährleisten.

Figur 4 zeigt noch den Halter 43, der ortsfest im Werkzeug 1 gelagert, beispielsweise am Grundkörper 3 des Werkzeugs 1 befestigt ist, oder Teil desselben oder eines Gehäuses des Werkzeugs 1 sein kann.

Figur 5 zeigt das als Halteplatte 65 ausgebildete Halteelement, das gegenüber Figur 4 in Richtung des Einfachpfeils 57 etwas nach unten bewegt ist. Damit wird auch der hier durch die Halteplatte 65 verdeckte Arbeitsschieber 7 nach unten verlagert. Dies führt dazu, dass das Ausgleichspendel 37 in Richtung des Einfachpfeils 61 etwas nach oben schwenkt, und dass der Hilfsschieber 19 in Richtung des Einfachpfeils 63 etwas nach rechts entlang der horizontalen Durchmesserlinie DH verlagert wird.

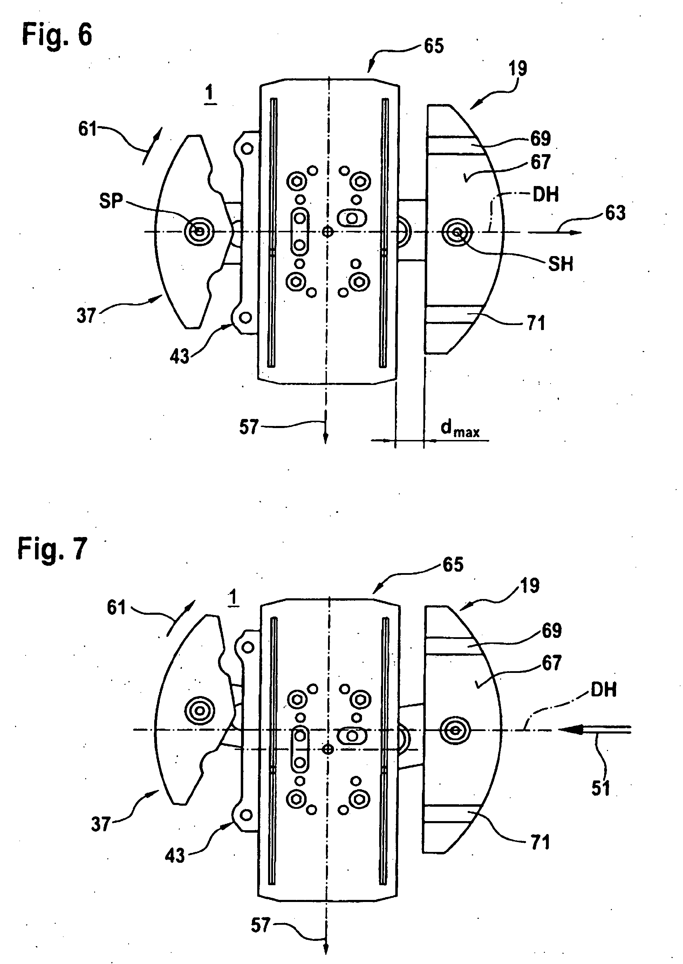

Eine weitere Verschiebung der Halteplatte 65 und damit des Arbeitsschiebers 7 nach unten in Richtung des Einfachpfeils 57 führt dazu, dass das Ausgleichspendel 37 in Richtung des Einfachpfeils 61 weiter nach oben schwenkt und der Hilfsschieber 19 weiter in Richtung des Pfeils 63 nach rechts verlagert wird. Bei der Darstellung gemäß Figur 6 befinden sich die Schwerpunkte SP des Ausgleichspendels 37 und SH des Hilfsschiebers 19 auf der horizontalen Durchmesserlinie DH. Der Hilfsschieber 19 weist in dieser Arbeitsposition der hier dargestellten Elemente den maximalen Abstand $d_{max}$ zum Arbeitsschieber 7 beziehungsweise zur Halteplatte 65 auf.

Wird gemäß Figur 7 der Arbeitsschieber mit der Halteplatte 65 in Richtung des Einfachpfeils 57 weiter nach unten bewegt, so schwenkt das Ausgleichspendel 37 über die horizontale Durchmesserlinie DH nach oben in Richtung des Einfachpfeils 61. Bei dieser Bewegung nähert sich der Hilfsschieber 19 wieder an den Arbeitsschieber 7 beziehungsweise der Halteplatte 65 an, er bewegt sich in Richtung des Doppelpfeils 51 in Richtung auf die Drehachse 5.

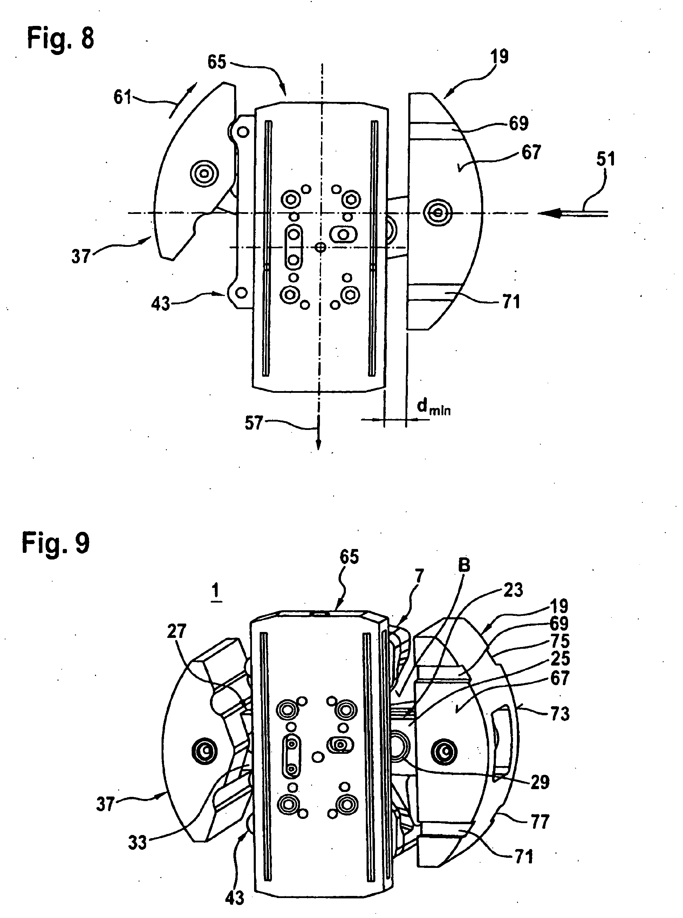

In Figur 8 wird der Arbeitsschieber mit der Halteplatte 65 in Richtung des Einfachpfeils 57 maximal nach unten verlagert. Dadurch bewegt sich das Ausgleichspendel 37 in Richtung des Einfachpfeils 61 in seine maximal obere Position. Dabei nähert sich der Hilfsschieber 19 in Richtung des Doppelpfeils 51 der Halteplatte 65 und damit dem Arbeitsschieber 7 maximal an, sodass er in minimalem Abstand $d_{min}$ zur Halteplatte 65 angeordnet ist.

Figur 9 zeigt die in den Figuren 4 bis 8 dargestellten wesentlichen Elemente des Werkzeugs 1 in perspektivischer Darstellung, wobei die Elemente sich in der in Figur 6 dargestellten Position befinden. Gleiche Teile sind mit gleichen Bezugsziffern versehen, sodass insofern auf die vorangegangene Beschreibung verwiesen wird.

Figur 9 zeigt das als Halteplatte 65 ausgebildete Halteelement. Durch die perspektivische Ansicht ist hier der Ausgleichsschieber 7 zu erkennen, an dem die Halteplatte 65 befestigt ist.

Diese Darstellung zeigt, dass der Hilfsschieber 19 nicht nur auf seiner in Figur 4 dargestellten Oberseite 67 mit Führungsnuten 69 und 71 versehen ist. Vielmehr sind auch auf seiner Unterseite 73 vorzugsweise derartige Führungsnuten 75 und 77 vorgesehen. Denkbar ist es aber auch, nur auf der Unterseite 73 derartige Nuten, gegebenenfalls auch nur eine Nut, vorzusehen.

Der Darstellung gemäß Figur 9 ist zu entnehmen, dass die erste Kopplungseinrichtung 23, hier deren Koppelstange 25, im Bereich einer gedachten Mittelebene, also quasi im Inneren des Hilfsschiebers 19 angelenkt ist. Ebenso ist hier zu sehen, dass die zweite Kopplungseinrichtung 27 beziehungsweise deren Koppelstange 33 in einer gedachten Mittelebene des Ausgleichspendels 37 eingreift.

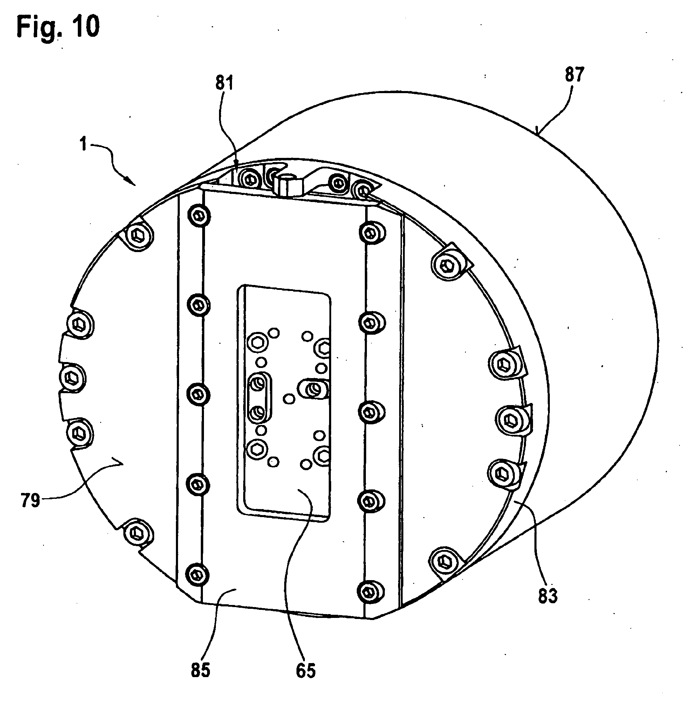

Figur 10 zeigt schließlich ein Werkzeug 1 in perspektivischer Ansicht, wobei hier dessen Vorderseite 79 zu sehen ist. In dieser ist eine Ausnehmung 81 realisiert, die hier in einer Abdeckplatte 83 angeordnet ist, die hier zweiteilig ist. In diese Ausnehmung 81 ist die Halteplatte 65 eingesetzt, die von einer Deckplatte 85 in der Ausnehmung 81 gehalten wird und verschieblich gelagert ist. Auf diese Weise ist es möglich, wie in den Figuren 4 bis 8 dargestellt, dass die Halteplatte 65 entlang einer gedachten Durchmesserlinie, hier in einer senkrechten Richtung, verschieblich geführt ist.

Durch die Verlagerung der Halteplatte 65 wird ein an dieser befestigtes Bearbeitungselement, also ein beliebiges Bearbeitungswerkzeug, gegenüber der Vorderseite 79 des Werkzeugs 1 verschoben. Um einen Fliehkraft- und Unwuchtausgleich zu erreichen, werden bei einer Verschiebung der Halteplatte 65 und einer damit verbundenen Verschiebung des Arbeitsschiebers 7, der Hilfsschieber 19 und das Ausgleichspendel 37, wie anhand der Figuren 1 bis 9 erläutert, verlagert.

An seinem der Vorderseite 79 gegenüberliegenden hinteren Ende 87 ist das Werkzeug 1 auf geeignete Weise entweder mit einer Maschine, mit einem Verlängerungsstück, einem Adapter oder dergleichen verbunden. Üblicherweise greift an dem hinteren Ende 87 eine Maschinenkopplung an, welche das Werkzeug 1 in Rotation versetzt und welche für eine Verstellung des Arbeitsschiebers 7 sorgt.

Dabei ist es möglich, dass die Verstellung des Arbeitsschiebers 7 durch Eingriff an diesem beziehungsweise am Hilfsschieber 19 erfolgt. Der Antrieb kann also eine translatorische Bewegung entweder des Arbeitsschiebers 7 oder des Hilfsschiebers 19 bewirken. Denkbar ist auch ein gleichzeitiger Eingriff an beiden Schiebern 7 und 19. Bevorzugt erfolgt die Verstellung eines Bearbeitungselements durch eine Verstellung des Arbeitsschiebers 7, die durch einen hier nicht dargestellten Antrieb bewirkt wird.

Es ist aber auch möglich, dass über die Maschinenkopplung ein Antrieb am Ausgleichspendel 37 eingreift und dieses entlang der in Figur 1 angedeuteten Kreisbahn 41 bewegt, um letztlich den Arbeitsschieber 7 und die daran befestigte Halteplatte 65 zu verstellen, damit also auch ein an der Halteplatte 65 angebrachtes Bearbeitungselement beziehungsweise Werkzeug.

Insgesamt wird deutlich, dass die erfindungsgemäße Lösung einen einfach aufgebauten, kompakten Aufbau bietet, einen Arbeitsschieber 7 innerhalb eines rotierenden Werkzeugs 1 zu verlagern und dabei einen sehr genauen Fliehkraft- und Unwuchtausgleich zu realisieren. Die hier dargestellte und erläuterte Konstruktion zeichnet sich durch einfache Schub- und Drehgelenke aus, die im Verbindungsbereich der ersten Kopplungseinrichtung 23 mit den zugehörigen Schiebern 7 und 19 aber auch im Verbindungsbereich der Kopplungseinrichtungen 23 und 27 realisiert werden.

Es zeigt sich im Übrigen, dass bei der Verlagerung des Arbeitsschiebers 7 beziehungsweise der Halteplatte 65 ein im Vergleich zu bekannten Lösungen großer Hub entlang einer gedachten Durchmesserlinie 11 (Figuren 1 und 2) realisiert werden kann, also ein großer Einstellweg eines Bearbeitungselements beziehungsweise Bearbeitungswerkzeugs, welches mit der Halteplatte 65 gekoppelt ist.

Bei allen Betrachtungen des Fliehkraft- und Unwuchtausgleichs ist, wie oben festgehalten, zu beachten, dass mit der Bezeichnung "Masse des Arbeitsschiebers 7" die sich aus der Masse des Arbeitsschiebers 7 selbst, der Masse mindestens eines Betätigungselements und der Masse einer Halteplatte zusammengesetzte Gesamtmasse betrachtet wird, welche durch die Masse des Hilfsschiebers 19 und des Ausgleichspendels 37 kompensiert wird.

Insbesondere aus Figur 1 wird deutlich, dass auf einer Seite einer gedachten Trennlinie der Schwerpunkt des Arbeitsschiebers (mit Bearbeitungselement und gegebenenfalls Halteplatte) und der Schwerpunkt des Hilfsschiebers 19 liegen und der Schwerpunkt des Ausgleichspendels 37 auf einer anderen Seite dieser gedachten Trennlinie. Durch diese Anordnung der Schwerpunkte in zwei gegenüberliegenden Bereichen des Grundkörpers 3 des Werkzeugs 1 ist ein Fliehkraft- und Unwuchtausgleich ohne weitere zusätzliche Massen möglich. Dies ermöglicht den oben erwähnten einfachen und kompakten Aufbau des Werkzeugs 1.

Auch die Tatsache, dass die erste Kopplungseinrichtung 23 und die zweite Kopplungseinrichtung 27 im Anlenkpunkt 29 unmittelbar miteinander gekoppelt sind, und dadurch, dass die Kopplungseinrichtungeri als vorzugsweise plattenförmige Kopplungsstangen ausgebildet sind, die unmittelbar in den Schwerpunkten der Schieber 7 und 19 beziehungsweise des Ausgleichspendels 35 eingreifen, wird im

Übrigen besonders einfach sichergestellt, einen kompakten Aufbau des Werkzeugs zu gewährleisten.

**Patentansprüche**

1. Werkzeug (1) zur Bearbeitung von Werkstücken mit

   - einer Drehachse (5),
   - einem Grundkörper (3),
   - mindestens einem ein Bearbeitungselement tragenden Arbeitsschieber (7), der gegenüber dem Grundkörper (3) verschiebbar ist,
   - mindestens einem weiteren Schieber, der gegenüber dem Grundkörper (3) verschiebbar ist,
   - mindestens einem Ausgleichspendel (37), das gegenüber dem Grundkörper (3) verschwenkbar ist,
   - einer den Arbeitsschieber (7) und den weiteren Schieber verbindenden ersten Kopplungseinrichtung (23), die schwenkbeweglich an dem Arbeitsschieber (7) und an dem weiteren Schieber angelenkt ist,
   - einer die erste Kopplungseinrichtung (23) und das Ausgleichspendel (37) verbindenden zweiten Kopplungseinrichtung (27),

   **dadurch gekennzeichnet, dass**

   - der weitere Schieber als Hilfsschieber (19) ausgebildet ist,
   - die zweite Kopplungseinrichtung (27) an der ersten Kopplungseinrichtung (23) schwenkbeweglich in einem Anlenkpunkt (29) angelenkt ist, und dass
   - die zweite Kopplungseinrichtung (27) schwenkbar um die Drehachse (5) des Werkzeugs (1) gelagert ist,
   - wobei bei einer Verlagerung des Arbeitsschiebers (7) der Hilfsschieber (19) - bezüglich der Drehachse (5) des Werkzeugs (1) gesehen - in entgegengesetzter Richtung verlagert wird.

2. Werkzeug nach Anspruch 1, **dadurch gekennzeichnet, dass** die erste Kopplungseinrichtung (23) unmittelbar an der zweiten Kopplungseinrichtung (27) angelenkt ist.

3. Werkzeug nach Anspruch 1 oder 2, **dadurch gekennzeichnet, dass** die erste Kopplungseinrichtung (23) als eine - vorzugsweise plattenförmige - erste Koppelstange (25) ausgebildet ist.

4. Werkzeug nach einem der vorhergehenden Ansprüche, **dadurch gekennzeichnet, dass** die zweite Kopplungseinrichtung (27) als - vorzugsweise plattenförmige - zweite Koppelstange (33) ausgebildet ist.

5. Werkzeug nach einem der vorhergehenden Ansprüche, **dadurch gekennzeichnet, dass** die Bewegungsrichtungen von Arbeitsschieber (7) und Hilfsschieber (19) senkrecht aufeinander stehen.

6. Werkzeug nach einem der vorhergehenden Ansprüche, **dadurch gekennzeichnet, dass** die Massen von Arbeitsschieber (7) und Hilfsschieber (19) gleich sind, wobei der Masse des Arbeitsschiebers (7) die Masse des mindestens einen Bearbeitungselements und gegebenenfalls einer Halteeinrichtung hinzuzurechnen sind.

7. Werkzeug nach einem der vorhergehenden Ansprüche, **dadurch gekennzeichnet, dass** die erste Kopplungseinrichtung (23) in den Schwerpunkten (SA, SH) des Arbeitsschiebers (7) und des Hilfsschiebers (19) - vorzugsweise unmittelbar - angelenkt ist.

8. Werkzeug nach einem der vorhergehenden Ansprüche, **dadurch gekennzeichnet, dass** der gemeinsame Schwerpunkt (SG) des Arbeitsschiebers (7) und des Hilfsschiebers (19) in der Mitte der ersten Kopplungseinrichtung (23), insbesondere der ersten Koppelstange (25), liegt.

9. Werkzeug nach Anspruch 8, **dadurch gekennzeichnet, dass** sich der gemeinsame Schwerpunkt (SG) auf einer Kreisbahn (39) um die Drehachse (5) des Werkzeugs (1) bewegt.

10. Werkzeug nach einem der vorhergehenden Ansprüche, **dadurch gekennzeichnet, dass** das Ausgleichspendel (37) gegenüber dem Arbeitsschieber (7) und dem Hilfsschieber (19) anordenbar ist.

11. Werkzeug nach einem der vorhergehenden Ansprüche, **dadurch gekennzeichnet, dass** der Abstand zur Drehachse (5) des Werkzeugs (1) und einem Anlenkpunkt (29) der zweiten Kopplungseinrichtung (27) an der ersten Kopplungseinrichtung (23) als $r_1$ bezeichnet wird, dass der Abstand zwischen der Drehachse (5) des Werkzeugs (1) und dem Ausgleichspendel (37) als $r_2$ bezeichnet wird, und dass folgende Gleichung gilt:

$r_1$ x (Gesamtmasse von Arbeitsschieber (7) unter Berücksichtigung der Masse des mindestens einen Bearbeitungselements und gegebenenfalls eines Halteelements sowie Hilfsschieber (19)) = $r_2$ x Masse des Ausgleichspendels (37).

12. Werkzeug nach einem der vorhergehenden Ansprüche, **dadurch gekennzeichnet, dass** die erste Kopplungseinrichtung (23) in einer gedachten Mittelebene des Arbeitsschiebers (7) und/oder in einer gedachten Mittelebene des Hilfsschiebers (19) angelenkt ist.

13. Werkzeug nach einem der vorhergehenden Ansprüche, **dadurch gekennzeichnet, dass** der Schwerpunkt (SA) des Arbeitsschiebers (7) und der Schwerpunkt (SH) des Hilfsschiebers (19) in einer gedachten Ebene liegen, auf welcher die Drehachse (5) des Werkzeugs (1) senkrecht steht.

14. Werkzeug nach Anspruch 13, **dadurch gekennzeichnet, dass** der Schwerpunkt (SP) des Ausgleichspendels (37) in der gedachten Ebene angeordnet ist, in welcher die Schwerpunkte (SA,SH) von Arbeitsschieber (7) und Hilfsschieber (19) liegen.

15. Werkzeug nach einem der vorhergehenden Ansprüche, **dadurch gekennzeichnet, dass** ein Antrieb zur Betätigung des Arbeitsschiebers (7) an einem der Schieber (7, 19) oder an dem Ausgleichspendel (37) angreift.

## Claims

1. Tool (1) for machining work pieces, comprising

    - a rotation axis (5),
    - a base body (3),
    - at least one operating slide (7) which carries a machining element and can be slid with respect to the base body (3),
    - at least one other slide which can be slid with respect to the base body (3),
    - at least one balancing pendulum (37) which can be pivoted with respect to the base body (3),
    - a first coupling device (23) which connects the operating slide (7) and the other slide and which is pivotally hinged to the operating slide (7) and the other slide,
    - a second coupling device (27) which connects the first coupling device (23) and the balancing pendulum (37),

    **characterized in that**

    - the other slide is designed as an auxiliary slide (19),
    - the second coupling device (27) is pivotally hinged to the first coupling device (23) at a hinge point (29), and that
    - the second coupling device (27) is mounted to be pivotable about the rotation axis (5) of the tool (1),
    - wherein in the case of a displacement of the operating slide (7), the auxiliary slide (19) is displaced - with regard to the rotation axis (5) of the tool (1) - in the opposite direction.

2. Tool according to claim 1, **characterized in that** the first coupling device (23) is hinged directly to the second coupling device (27).

**3.** Tool according to claim 1 or claim 2, **characterized in that** the first coupling device (23) is designed as a - preferably plate-shaped - first coupling rod (25).

**4.** Tool according to any one of the preceding claims, **characterized in that** the second coupling device (27) is designed as a - preferably plate-shaped - second coupling rod (33).

**5.** Tool according to any one of the preceding claims, **characterized in that** the movement directions of the operating slide (7) and the auxiliary slide (19) are perpendicular to one another.

**6.** Tool according to any one of the preceding claims, **characterized in that** the masses of the operating slide (7) and the auxiliary slide (19) are equal, wherein the mass of the at least one machining element and optionally the mass of an holding device is to be added to the mass of the operating slide (7).

**7.** Tool according to any one of the preceding claims, **characterized in that** the first coupling device (23) is hinged - preferably directly - in the centres of gravity (SA, SH) of the operating slide (7) and the auxiliary slide (19).

**8.** Tool according to any one of the preceding claims, **characterized in that** the common centre of gravity (SG) of the operating slide (7) and the auxiliary slide (19) lies in the middle of the first coupling device (23), in particular of the first coupling rod (25).

**9.** Tool according to claim 8, **characterized in that** the common centre of gravity (SG) moves on a circular path (39) about the rotation axis (5) of the tool (1).

**10.** Tool according to any one of the preceding claims, **characterized in that** the balancing pendulum (37) can be arranged opposite to the operating slide (7) and the auxiliary slide (19).

**11.** Tool according to any one of the preceding claims, **characterized in that** the distance between the rotation axis (5) of the tool (1) and a hinge point (29) of the second coupling device (27) on the first coupling device (23) is designated as $r_1$, that the distance between the rotation axis (5) of the tool (1) and the balancing pendulum (37) is designated as $r_2$, and the following equation applies:

$r_1$ x (total mass of the operating slide (7) including the mass of the at least one machining element and optionally of a holding element, and of the auxiliary slide (19)) = $r_2$ x mass of the balancing pendulum (37).

**12.** Tool according to any one of the preceding claims, **characterized in that** the first coupling device (23) is hinged in an imaginary centre plane of the operating slide (7) and/or in an imaginary centre plane of the auxiliary slide (19).

**13.** Tool according to any one of the preceding claims, **characterized in that** the centre of gravity (SA) of the operating slide (7) and the centre of gravity (SH) of the auxiliary slide (19) lie in an imaginary plane to which the rotation axis (5) of the tool (1) is perpendicular.

**14.** Tool according to claim 13, **characterized in that** the centre of gravity (SP) of the balancing pendulum (37) is arranged in the imaginary plane in which lie the centres of gravity (SA, SH) of the operating slide (7) and the auxiliary slide (19).

**15.** The tool according to any one of the preceding claims, **characterized in that** a drive for actuating the operating slide (7) engages on one of the slides (7, 19) or on the balancing pendulum (37).

## Revendications

**1.** Outil (1) pour usiner des pièces avec

- un axe de rotation (5),
- un corps de base (3),
- au moins un coulisseau de travail (7) qui porte un élément d'usinage et qui peut être déplacé par rapport au corps de base (3),
- au moins un autre coulisseau qui peut être déplacé par rapport au corps de base (3),
- au moins un pendule d'équilibrage (37) qui peut pivoter par rapport au corps de base (3),
- un premier dispositif d'accouplement (23) qui relie le coulisseau de travail (7) et l'autre coulisseau et qui est articulé de manière pivotante au coulisseau de travail (7) et à l'autre coulisseau,
- un deuxième dispositif d'accouplement (27) reliant le premier dispositif d'accouplement (23) et le pendule d'équilibrage (37),

**caractérisé en ce, que**

- l'autre coulisseau soit conçu comme coulisseau auxiliaire (19),
- le deuxième dispositif d'accouplement (27) soit articulé de manière pivotante en un point d'articulation (29) au premier dispositif d'accouplement (23), et que
- le deuxième dispositif d'accouplement (27) soit monté sur paliers de manière à pouvoir pivoter autour de l'axe de rotation (5) de l'outil (1),
- et que, lorsque le coulisseau de travail (7) est déplacé, le coulisseau auxiliaire (19) est déplacé en sens opposé - vu par rapport à l'axe de rotation (5) de l'outil (1).

2. Outil selon la revendication 1, **caractérisé en ce, que** le premier dispositif d'accouplement (23) soit directement articulé au deuxième dispositif d'accouplement (27).

3. Outil selon la revendication 1 ou 2, **caractérisé en ce, que** le premier dispositif d'accouplement (23) soit conçu - de préférence sous forme de plaque - en tant que première tringle de couplage (25).

4. Outil selon l'une des revendications précédentes, **caractérisé en ce, que** le deuxième dispositif d'accouplement (27) soit conçu - de préférence sous forme de plaque - en tant que deuxième tringle de couplage (33).

5. Outil selon l'une des revendications précédentes, **caractérisé en ce, que** les sens de déplacement du coulisseau de travail (7) et du coulisseau auxiliaire (19) soient perpendiculaires entre eux.

6. Outil selon l'une des revendications précédentes, **caractérisé en ce, que** les masses du coulisseau de travail (7) et du coulisseau auxiliaire (19) soient identiques, la masse de l'au moins un élément d'usinage et éventuellement celle d'un dispositif de maintien devant être ajoutées à la masse du coulisseau de travail (7).

7. Outil selon l'une des revendications précédentes, **caractérisé en ce, que** le premier dispositif d'accouplement (23) soit articulé - de préférence directement - aux barycentres (SA, SH) du coulisseau de travail (7) et du coulisseau auxiliaire (19).

8. Outil selon l'une des revendications précédentes, **caractérisé en ce, que** le barycentre commun (SG) du coulisseau de travail (7) et du coulisseau auxiliaire (19) soit situé au milieu du premier dispositif d'accouplement (23), en particulier de la première tringle de couplage (25).

9. Outil selon la revendication 8, **caractérisé en ce, que** le barycentre commun (SG) se déplace sur une trajectoire circulaire (39) autour de l'axe de rotation (5) de l'outil (1).

10. Outil selon l'une des revendications précédentes, **caractérisé en ce, que** le pendule d'équilibrage (37) soit positionnable par rapport au coulisseau de travail (7) et au coulisseau auxiliaire (19).

11. Outil selon l'une des revendications précédentes, **caractérisé en ce, que** la distance à l'axe de rotation (5) de l'outil (1) et d'un point d'articulation (29) du deuxième dispositif d'accouplement (27) au premier dispositif d'accouplement (23) soit désignée par $r_1$, que la distance entre l'axe de rotation (5) de l'outil (1) et le pendule d'équilibrage (37) soit désignée par $r_2$, et que l'équation suivante s'applique :

$r_1$ x (masse totale du coulisseau de travail (7) en prenant en compte la masse de l'au moins un élément d'usinage et éventuellement d'un élément de maintien ainsi que le coulisseau auxiliaire (19)) = $r_2$ x masse du pendule d'équilibrage (37).

12. Outil selon l'une des revendications précédentes, **caractérisé en ce, que** le premier dispositif d'accouplement (23) soit articulé sur un plan médian imaginaire du coulisseau de travail (7) et/ou sur un plan médian imaginaire du coulisseau auxiliaire (19).

13. Outil selon l'une des revendications précédentes, **caractérisé en ce, que** le barycentre (SA) du coulisseau de travail (7) et le barycentre (SH) du coulisseau auxiliaire (19) soient situés dans un plan imaginaire, par rapport auquel l'axe de rotation (5) de l'outil (1) est perpendiculaire.

14. Outil selon la revendication 13, **caractérisé en ce, que** le barycentre (SP) du pendule d'équilibrage (37) soit agencé dans le plan imaginaire, dans lequel sont situés les barycentres (SA, SH) du coulisseau de travail (7) et du coulisseau auxiliaire (19).

15. Outil selon l'une des revendications précédentes, **caractérisé en ce, qu'**un entraînement, destiné à l'actionnement du coulisseau de travail (7), soit appliqué à un des coulisseaux (7, 19) ou au pendule d'équilibrage (37).

Fig. 2

Fig. 1

Fig. 3

EP 2 747 929 B1

## Fig. 4

## Fig. 5

**Fig. 6**

**Fig. 7**

## Fig. 8

## Fig. 9

# Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007042248 A1